# EUROPEAN PATENT SPECIFICATION

(11) **EP 3 702 124 B1**
(45) Date of publication and mention of the grant of the patent: **13.03.2024**
(21) Application number: 18906909.9
(22) Date of filing: 10.10.2018
(51) Int. Cl.: B29C 53/08, B29C 33/42, B29C 33/02, B29C 33/38, B29C 64/00, B22F 10/20

(54) **BENDING MOLD AND PRODUCTION METHOD FOR BENDING MOLD**
BIEGEFORM UND VERFAHREN ZUR HERSTELLUNG EINER BIEGEFORM
MOULE DE CINTRAGE ET MÉTHODE DE PRODUCTION POUR MOULE DE CINTRAGE

(30) Priority: 22.02.2018 JP 2018030063
(43) Date of publication of application: 02.09.2020
(73) Proprietor: Sanoh Industrial Co., Ltd., Tokyo 150-0013 (JP)
(72) Inventor: LIU, Jining, Ibaraki 306-0041 (JP); NAKAZATO, Kazuhiko, Ibaraki 306-0041 (JP); HABU, Takaaki, Ibaraki 306-0041 (JP)
(74) Representative: VKK Patentanwälte PartG mbB
(86) International application number: PCT/JP2018/037704
(87) International publication number: WO 2019/163188

(56) References cited:
- DE-A1- 3 939 352
- JP-A- H09 164 586
- JP-A- H09 164 586
- JP-A- 2003 305 768
- JP-A- 2017 530 255
- JP-A- 2017 530 255
- JP-U- S5 932 405
- Shinyobjects: "1" PVC Pipe Clip by ShinyObjects - Thingiverse", , 10 October 2017 (2017-10-10), XP055816995, Retrieved from the Internet: URL:https://www.thingiverse.com/thing:2577 630 [retrieved on 2021-06-23]

## Description

### [Technical Field]

There exists a technique for forming, for example, a thermoplastic resin tube by heating the thermoplastic resin tube and inserting the thermoplastic resin tube into a bending die in order to produce a bent pipe such as an oil feed pipe for an automobile. The present invention relates to a bending die used for forming such a bent pipe, and a method for manufacturing the bending die.

### [Background Art]

A bending die has been used to form a tube made of thermoplastic resin in a predetermined shape while bending the tube. A bending die has been produced by manually combining, for example, a plurality of steel plates and welding these steel plates into a desired shape. Another way to produce a bending die is to press a flat steel plate into a desired shape.

PTL 1 also discloses the following technique.

A desired shape of bending die is manufactured by extruding an aluminum material to produce a U-shaped tube having a U-shaped cross section, insetting a rod-shaped, plastic core made of thermoplastic resin of a predetermined hardness into the U-shaped tube, bending the U-shaped tube in this state by using a bender, and thereafter removing the core. Then, the thermoplastic resin tube that is extruded into a straight tube is insetted and set inside this bending die, which is then heated and bent, to obtain a bent tube having a predetermined bent shape.

As a prior art in relation to this technology, PTL 1 also discloses a bending die having a rectangular cross section with an opened upper surface.

PTL 2 and PTL 4, both disclose a bending die in which a groove having a semicircular cross section is milled on a non-flat upper surface of the bending die. Also, PTL 3 discloses a bending die formed by punching out a groove having a substantially C-shaped cross section.

### [Citation List]

### [Patent Literature]

[PTL 1] Japanese Patent Application Laid-open No. H09-164586
[PTL 2] Japanese Patent Application Laid-open No. 2011-79318
[PTL 3] US 2003/0042655A1
[PTL 4] DE 39 39 352 A1

### [Summary of Invention]

### [Technical Problem]

A bending die for shaping a thermoplastic resin tube into a predetermined shape by inserting the tube therein has conventionally been created manually as described above. However, when creating a bending die into a desired shape by manually combining a plurality of steel plates and welding the steel plates, the shape and size of the bending die vary due to the skills of a worker. For this reason, a method for creating a bending die without relying on the skills of the worker has been searched for.

A conventional technique has been performed in which, in order to produce a product of a predetermined shape by manually insetting a tube made of thermoplastic resin into a die having a U-shaped cross section and then heating the tube, a heat medium (gas or liquid) is poured into the tube and heated beforehand, and then the heated tube is manually inserted into the die. In such a technique, a hot tube is put in a die manually, posing a risk of burn injury, hence poor workability. Therefore, there is a need for a method for automatically inserting a tube into a bending die without relying on manual work.

The bending dies and methods for manufacturing the bending dies that are disclosed in PTL 1, PTL 2, and PTL 3 were proposed in order to solve the foregoing problems. However, each of these proposals has some problems yet to be solved. For example, when creating a bending die from a flat plate by means of pressing, there are limitations to the shape of the bending die. In addition, it is impossible to create a bending die that is shaped to have a part that is invisible when viewed from a certain direction. In other words, these prior art techniques are not capable of creating a bending die that bends sequentially in the directions of an x-axis, a y-axis and a z-axis that are orthogonal to one another. For example, it is difficult to create a bending die having a complex shape such as the one described above by using the method disclosed in PTL 1 that bends an aluminum tube having a core therein and then removes the core. Furthermore, the method disclosed in PTL 2 that creates a bending die by means of milling not only has the same issues but also generates a large amount of milling waste. The same issues remain in regard to the shape of a bending die when creating a bending die by means of punching described in PTL 3.

The bending dies described in the prior art are configured such that a tube is manually insetted therein. Specifically, using the judgement and skills of a worker, a thermoplastic resin tube is insetted into a bending die having a complex shape, to make a product thus having a complex shape. However, when creating a considerably long product from a tube, the product exceeding, for example, two meters in length, it is not easy to manually inset such a product into a bending die, and it is practically impossible to do so. Moreover, since insetting a heated thermoplastic resin tube into a bending die poses a risk of burn injury, it is desirable that such task is performed automatically.

When insetting a thermoplastic resin tube into a bending die, the tube is heated beforehand by using a heat medium, but if the temperature of the bending die is not controlled as in the prior art, after insetting the tube in the bending die, the tube is often cooled down quicker than planned, posing a risk of deformation of the resultant product. Further, cooling of the product can be slower than planned prior to removing the product, consequently affecting work schedules.

A first object of the present invention is to propose a bending die capable of creating a product by insetting a thermoplastic resin tube into the bending die, even if the shape of the product exceeds two meters in length or is complex such that the product is bent freely within three-dimensional space. A second object of the present invention is to propose a bending die into which a thermoplastic resin tube can be insetted using an automatic insetting device. A third object of the present invention is to propose a bending die that is configured such that the temperature thereof can be controlled. A fourth object of the present invention is to propose a method for manufacturing such bending dies.

### [Solution to Problem]

The objects described above were resolved by a bending die and a method for manufacturing the bending die as claimed.

### [Advantageous Effects of Invention]

The bending die according to the present invention described above is capable of creating a product even if the shape of the product exceeds two meters in length or is complex such that the product is bent freely within three-dimensional space. In addition, not only is it possible to optimize the position of the opening of the recess portion of the bending die so as to avoid buckling when insetting a tube in the bending die, but also the tube that has been insetted in the bending die can be prevented from being easily removed from the bending die.

### [Brief Description of Drawings]

[Fig. 1]

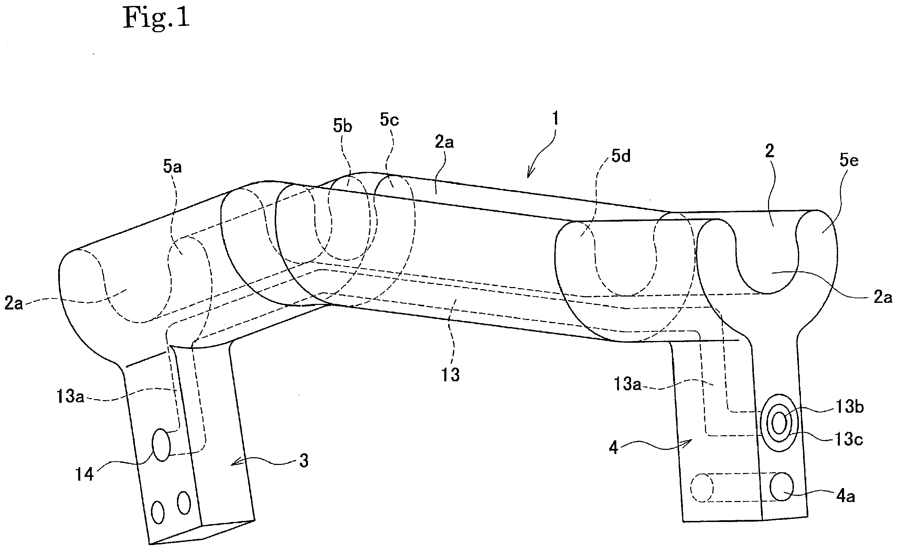

   Fig. 1 is a schematic perspective view showing an embodiment of a bending die (unit bending die) according to the present invention.
[Fig. 2]

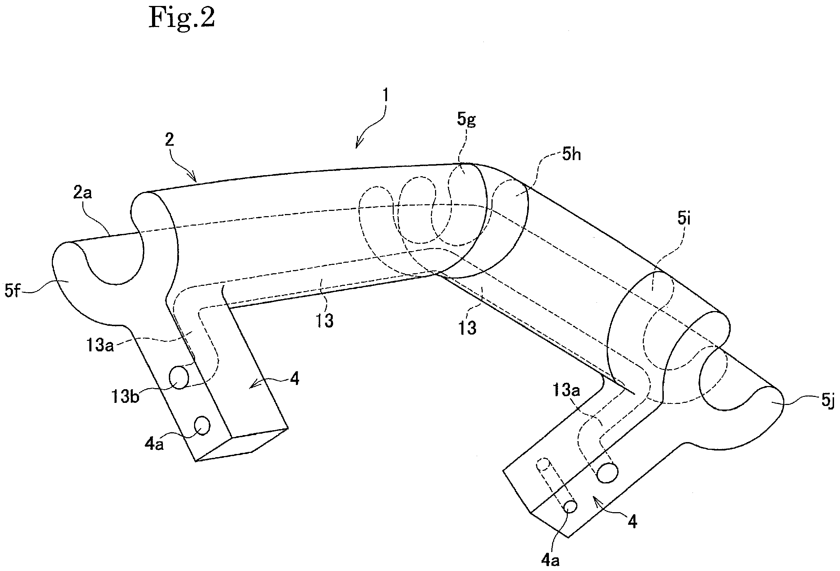

   Fig. 2 is a schematic perspective view showing another embodiment of the bending die (unit bending die) according to the present invention.
[Fig. 3]

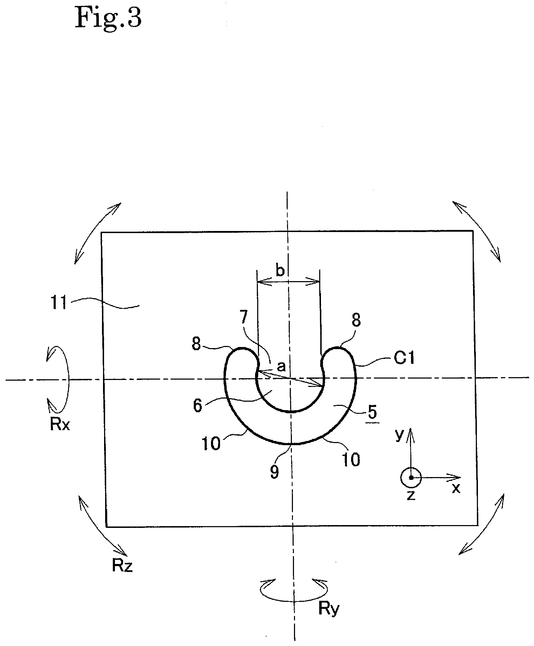

   Fig. 3 is a front view showing an example of a profile.
[Fig. 4]

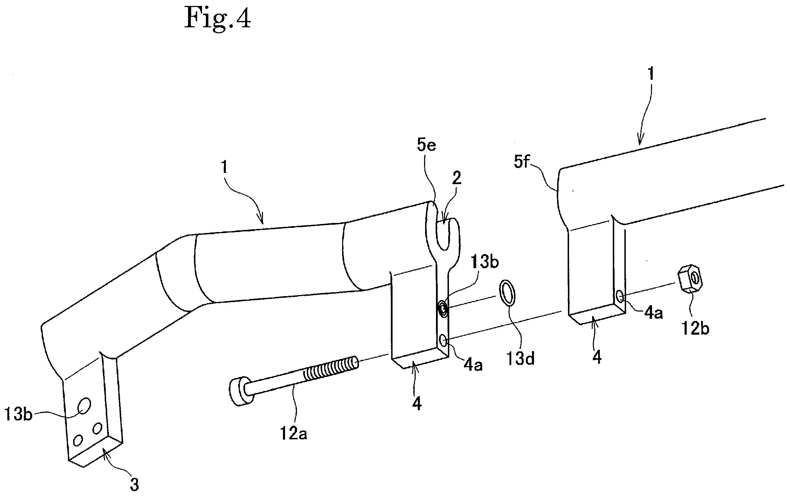

   Fig. 4 is a schematic perspective view showing how the unit bending dies shown in Figs. 1 and 2 are connected.
[Fig. 5]

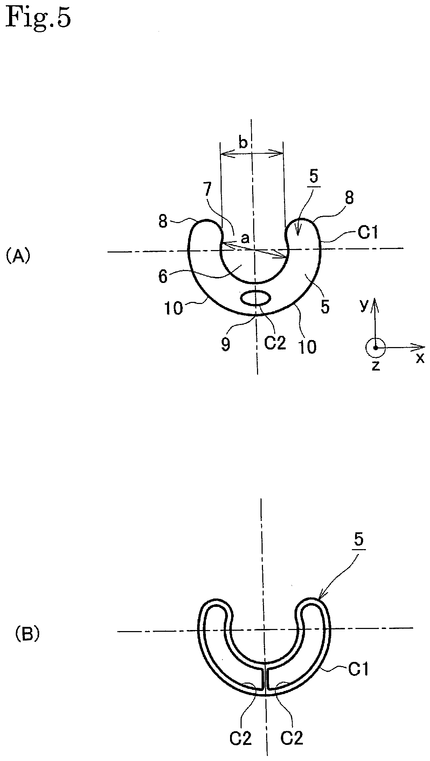

   Fig. 5 is a front view showing an example of the profile in which a heat medium hole is formed.
[Fig. 6]

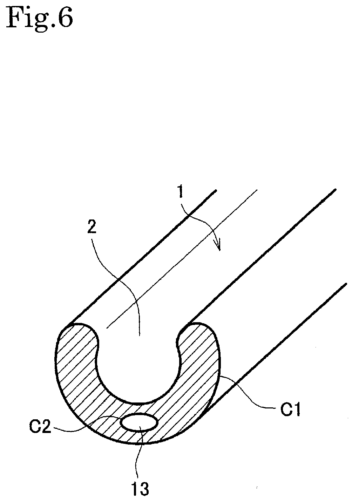

   Fig. 6 is a schematic perspective view showing a cross section of the bending die according to an embodiment, the bending die having the heat medium hole formed therein.
[Fig. 7]

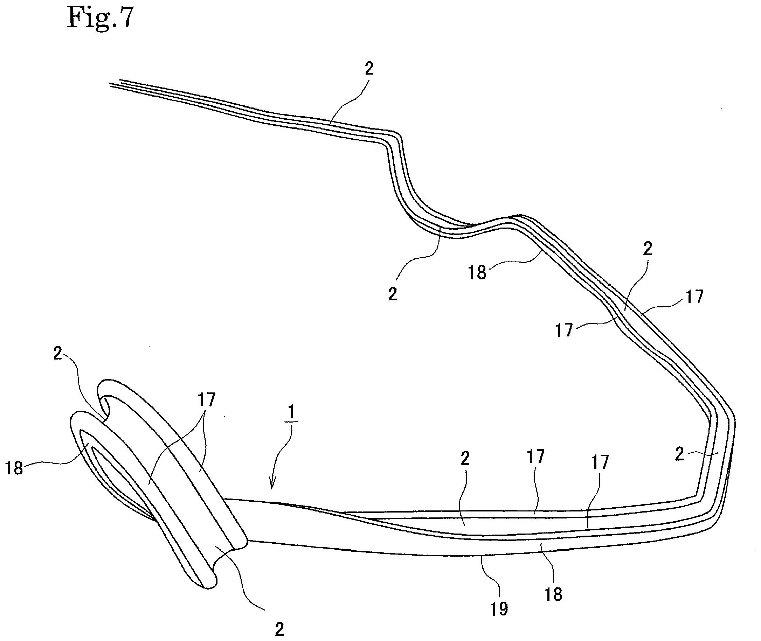

   Fig. 7 is a schematic perspective view showing an embodiment of the bending die formed by connecting a number of unit bending dies and bending these unit bending dies three-dimensionally and freely.
[Fig. 8]

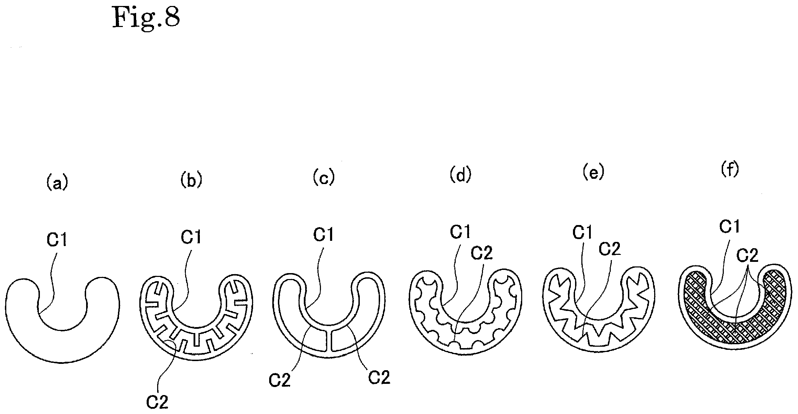

   Fig. 8 is a front view showing several preferred examples of the shape of the profile, particularly the shape of a second closed curve.
[Fig. 9]

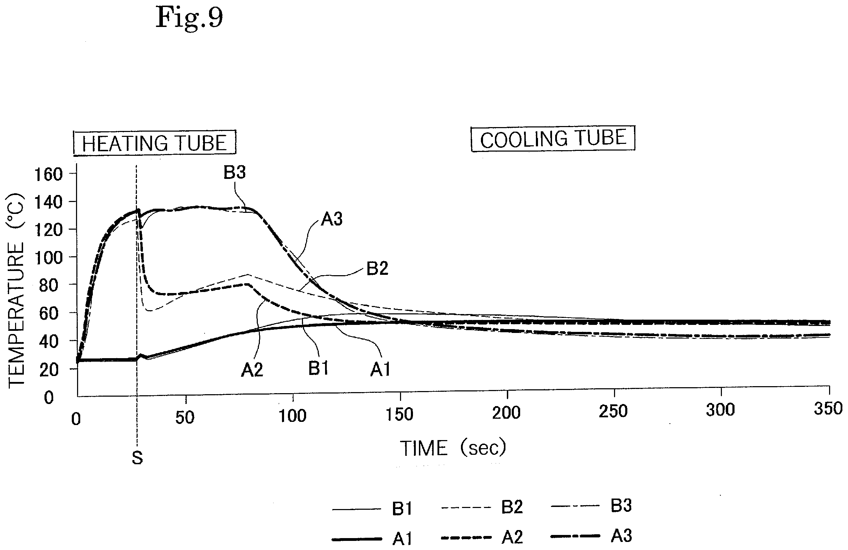

   Fig. 9 is a diagram showing an example of measuring temperature changes at three points in a case where a thermoplastic resin tube is formed using a solid bending die A formed with the profile shown in Fig. 8(a), and in a case where the thermoplastic resin tube is formed using a bending die B having two heat medium holes formed by the profile shown in Fig. 8(c).
[Fig. 10]

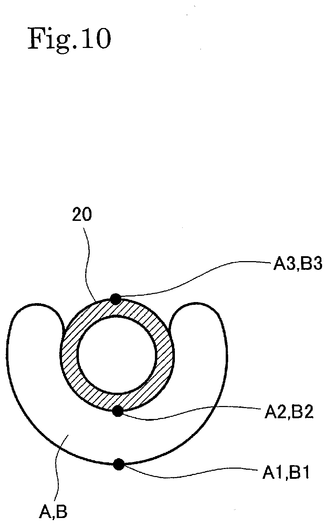

   Fig. 10 is a diagram showing temperature measurement points A1, A2, A3 of the bending die A, and temperature measurement points B1, B2, B3 of the bending die B.
[Fig. 11]

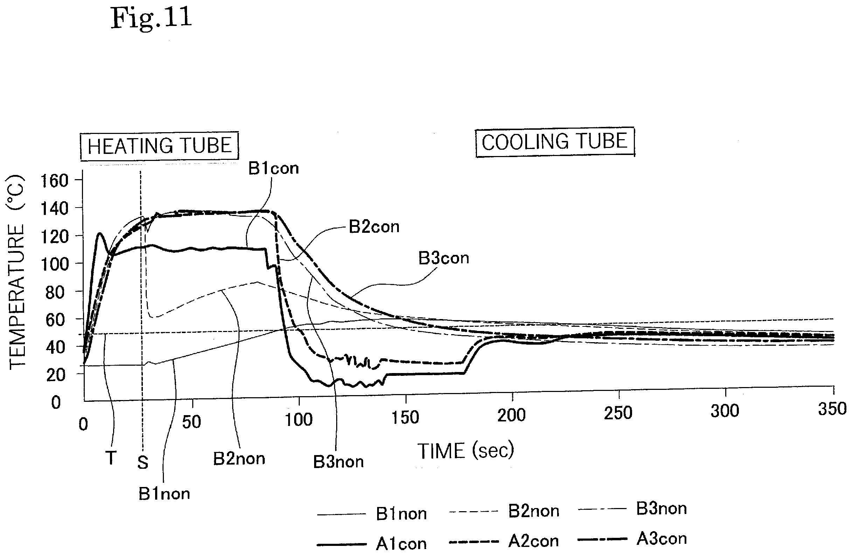

   Fig. 11 is a diagram showing an example of measuring temperature changes at three points of the tube in a case where the bending die B having the heat medium holes is used, the bending die B being formed with the profile shown in Fig. 8(c), and where the temperature of the bending die is not controlled (non-control), and in a case where the temperature of the bending die is controlled (controlled).

### [Description of Embodiments]

A bending die and a method for manufacturing the bending die according to the present invention are described hereinafter with reference to the drawings.

Figs. 1 and 2 are each a schematic perspective view showing an embodiment of the bending die (unit bending die) according to the present invention. In an example of this embodiment, the "bending die" is formed by connecting a plurality of "unit bending dies." Fig. 1 shows an example of a unit bending die disposed at an end of the bending die, and Fig. 2 shows an example of a unit bending die disposed adjacent to the unit bending die of Fig. 1.

Note that in this specification, to avoid complication, corresponding members in different examples of the embodiment are described using the same reference numerals.

A unit bending die 1 of Fig. 1 has a tube insetting portion 2 that forms a recess portion into which a tube is insetted, an attachment 3 for fixing the unit bending die 1 to a frame which is not shown, and a connection 4 for connecting the unit bending die 1 to an adjacent unit bending die (such as the unit bending die shown in Fig. 2).

A tube insetting recess portion 2a is formed in the tube insetting portion 2. It is preferred that the cross-sectional shape of the recess portion 2a be substantially constant throughout the entire recess portion 2a in order to inset an unshown tube whose cross-sectional shape is substantially constant throughout the entire tube. Therefore, cross-sectional shapes (particularly the cross-sectional shape of the insetting recess portion 2a) perpendicular to a longitudinal direction of the unit bending die 1 are substantially constant at all times. Specifically, cross sections 5a, 5b, 5c, 5d, 5e of different parts of the unit bending die 1 shown in Fig. 1 and cross sections 5f, 5g, 5h, 5i, 5j of different parts of the unit bending die 1 shown in Fig. 2 have substantially the same cross-sectional shape. However, the attachment 3 and the connection 4 each have an accompanying structure in addition to the insetting recess portion 2a; thus, the cross-sectional shapes thereof are different from those of the other parts.

The shapes of the unit bending dies 1, 1 illustrated in Figs. 1 and 2 are formed by continuously moving, in three-dimensional space, a profile 5 including a substantially circular-shaped first closed curve C1 having a recess portion as shown in Fig. 3. In this specification, a two-dimensional figure that creates the cross-sectional shape of the bending die (or unit bending die) 1 is referred to as "profile." The cross section that shows the profile of the bending die (or unit bending die) is referred to as "profile surface."

As shown in Fig. 3, the profile 5 has a planar shape that includes the substantially circular-shaped first closed curve C1 having a recess portion. The profile 5 shown in Fig. 3 includes a recess portion 6, an opening 7, upper rail portions 8, 8 that are gentle curves or straight lines adjacent to both sides of the opening 7, a rear-side section 9 of the opening 7, and lower rail portions 10, 10 that are gentle curves or straight lines adjacent to both sides of the rear-side section 9. It is preferred that a groove width a of the recess portion 6 be designed to be slightly wider than an opening width b of the recess portion 6. In this manner, the tube that is already insetted into the tube insetting portion 2 formed by the recess portion 6 can be prevented from being easily removed.

In order to make the following description more easily understandable, two orthogonal directions are set within a plane 11 including the profile 5. As shown in Fig. 3, for example, the direction of a symmetry axis of the first closed curve C1 of the profile 5 is taken as a y direction, and the direction perpendicular to the y direction is taken as an x direction. The direction perpendicular to the x direction and the y direction is taken as a z direction. In general, the bending die or unit bending die 1 according to the present invention has a shape generated by a virtual, continuous movement of one profile in three-dimensional space, the profile being a two-dimensional figure. Typical examples of the continuous movement of the profile within three-dimensional space include parallel translation, a turning or tilting movement which is a combination of a change in the direction of the profile surface and parallel translation thereof, a twisting movement which is a combination of in-plane rotation and parallel translation of the profile surface, or a combination of all these movements. Note that the y direction and the x direction within the profile 5 appear to change as the profile moves, when viewed in three-dimensional space fixed outside. Naturally, the z direction perpendicular to the x direction and the y direction appears to change as well.

The parallel translation of the profile within three-dimensional space means simply moving the plane 11 including the profile 5 in the z direction. A turning movement Ry means rotating the direction of the plane 11 of the profile about the direction of the opening 7 of the profile 5 (y direction) or a combination of this rotation and parallel translation. A tilting movement Rx means rotating the direction of the plane 11 of the profile about the direction perpendicular to the direction of the opening 7 of the profile 5 (x direction) or a combination of this rotation and parallel translation. In-plane rotation Rz of the profile surface means rotating the profile about the direction (x direction) perpendicular to the direction of the opening 7 of the profile 5 without changing the direction of the plane 11 of the profile, and the twisting movement is a combination of the in-plane rotation Rz and parallel translation.

The movements of the profile in the present invention are not limited to the movements described above, and may be any movement that is continuous, smooth, and unidirectional without changing the shape of the profile 5. For example, movements or the like that combine the movements described above are included as well.

For example, a section from the profile surface 5a to the next profile surface 5b at the left end of Fig. 1 corresponds to parallel translation, a section to the next profile surface 5c corresponds to a tilting movement with the x direction as the axis, a section to the vicinity of the next profile surface 5d corresponds to parallel translation, and a section to the profile surface 5e at the right end corresponds to a combination of a tilting movement and parallel translation. The shape of the unit bending die 1 is formed by these profile movements.

Moreover, a section from the profile surface 5f to the next profile 5g at the left end of Fig. 2 corresponds to parallel translation, a section to the next profile 5h corresponds to a combination of a tilting movement, a turning movement, and a twisting movement, a section to the next profile 5i corresponds to a twisting movement, and a section to the profile surface 5j at the right end corresponds to parallel translation. The shape of the unit bending die 1 is formed by these profile movements.

These movements are virtually executed during a design process of the bending die. Based on these virtual movements, the shape of the bending die is determined, to create a design drawing thereof, numerical data concerning the shape, and the like. Based on the design drawing and the data, the bending die or unit bending die is created by a three-dimensional printing technique using metal (such as aluminum, stainless steel), a heat resistant resin, or the like. Since the three-dimensional printing technique using metal and other materials is well-known, a detailed description thereof is omitted herein.

Since the three-dimensional printing technique is employed, the tube insetting portion 2, the attachment 3, the connection 4, and other members accompanying the unit bending die 1 shown in Figs. 1 and 2 can integrally be formed for each unit bending die.

The unit bending die 1 of Fig. 1 and the unit bending die 1 of Fig. 2 are joined to each other by the profile surface 5e of Fig. 1 and the profile surface 5f of Fig. 2. In order to connect these unit bending dies 1, 1, the right end of the unit bending die of Fig. 1 and the left end of the unit bending die of Fig. 2 are provided with connections 4, 4, respectively.

Fig. 4 is a schematic perspective view showing how the unit bending dies 1, 1 of Figs. 1 and 2 are connected. As shown in Fig. 4, the connections 4 are integrated with the unit bending dies 1 as substantially rectangular parallelepiped portions under end portions of the respective unit bending dies 1. The connections 4 each have a screw insertion hole 4a. The two unit bending dies 1, 1 can be connected by bringing the profile surface 5e of Fig. 1 and the profile surface 5f of Fig. 2 into abutment with each other, inserting a screw 12a into the holes 4a, 4a as shown in Fig. 4, and tightening the screw with a nut 12b. A long bending die can be formed by repeating this step. In a case where the resultant product is not long, then the connections are not necessary since a single unit bending die is sufficient.

When insetting a thermoplastic resin tube into the bending die 1, the tube is often preheated, and the tube is often cooled in order to promptly remove the formed product from the bending die 1. If the temperature of the bending die 1 is low even after preheating the tube, the temperature of the tube drops. Consequently, the tube cannot be formed as planned. In addition, even when trying to promptly cool the product, cooling may take a long time if the temperature of the bending die 1 is high. Therefore, it is preferred that the temperature of the bending die 1 be controlled in order to avoid such issues.

The bending die 1 according to the present invention can be provided therein with a heat medium hole 13 in which a temperature control medium (liquid or gas) for heating or cooling the bending die. Fig. 5(A) is a front view showing an example of the profile in which one heat medium hole is formed. The profile 5 including the first closed curve C1 internally includes a second closed curve C2 composed of a closed curve. The bending die 1 in which the heat medium hole 13 is created can be realized by continuously moving the first closed curve C1 and the second closed curve C2 in three-dimensional space. Fig. 5(B) shows an example of the profile 5 that includes two second closed curves C2, C2 in order to form two heat medium holes. In Fig. 5(A), the same reference numerals are applied to the parts or regions same as those of the profile shown in Fig. 3.

Fig. 6 is a schematic perspective view showing a cross section of the bending die 1 that is created by continuously moving the profile 5 of Fig. 5(A) in three-dimensional space. The region surrounded by the second closed curve C2 is a cavity, and the heat medium hole 13 is formed therein.

Since the heat medium hole 13 does not function without connecting the bending dies 1, 1 adjacent to each other, the heat medium hole 13 is formed in the connection 4 as well. As shown in Figs. 1 and 2, the heat medium hole 13 of the bending die 1 continuously shifts to a heat medium hole 13a formed inside the connection 4, and by bringing the unit bending die 1 of Fig. 1 and the unit bending die 1 of Fig. 2 into abutment with each other, the heat medium hole 13a is formed in such a manner that the respective tube insetting portions 2, 2 are communicated with each other and at the same time openings 13b, 13b of the respective heat medium holes 13, 13 are communicated with each other.

An O-ring seat 13c is provided in the opening 13b of the heat medium hole 13 in the connection of the bending die 1 shown in Fig. 1. As shown in Fig. 4, an O-ring 13d is insetted in the O-ring seat 13c, the opening 13b of the connection 4 of the bending die 1 shown in Fig. 2 is brought into abutment with the O-ring 13d, the screw 12a is passed through the holes 4a, 4a, and then the screw 12a is tightened and fixed by the nut 12b, whereby the heat medium holes 13, 13 of the two adjacent bending dies 1, 1 can be connected to each other without causing a fluid leakage. By repeating this step, even in a long bending die formed by connecting a plurality of unit bending dies, the heat medium can be poured into all of the unit bending dies to control the temperature of the bending die.

Supply/discharge ports 14 for supplying or discharging the heat medium to the heat medium holes 13 are formed in the unit bending dies that are located at both ends of a series of unit bending dies forming the bending die. An example of the supply/discharge ports 14 is illustrated in Fig. 1. The attachment 3 is provided in the unit bending die 1, the attachment 3 having the heat medium hole 13a therein, wherein an end portion of the heat medium hole 13a is connected to the supply/discharge port 14.

The series of unit bending dies connected serially by the connections 4 is fixed to a frame, not shown, which supports the device at all or a part of sections of the connections 4 or the attachments 3. The unit bending dies are attached to the frame, not shown, as appropriate by means of screws, clipping, or welding depending on the condition of the site.

Fig. 7 is a schematic perspective view showing the bending die 1 formed by connecting a number of unit bending dies 1, 1... and bending these unit bending dies freely in three-dimensional space. In Fig. 7, the illustrations of the connection connecting adjacent unit bending dies, the attachment for fixing the unit bending dies to the frame, the frame and the like are omitted. When forming the bending die 1 in this manner, the tube insetting portions 2 can be shaped to look as if the tube insetting portions 2 turn, move up and down, or move spirally. In so doing, unlike the prior art, the tube insetting portions 2 do not have to be opened in a specific direction in three-dimensional space (e.g., the direction of the z-axis perpendicular to the x-axis and y-axis). Such a configuration has the following advantages.

When insetting the thermoplastic resin tube into bent portions of the tube insetting portions 2, the tube often becomes flat or buckles. Such a phenomenon tends to occur when the y-direction of the profile surface of each tube insetting portion (referred to as "opening direction") is not present in a plane that includes the center line of the tube insetting portions on both sides of the bent portions of the bending die (referred to as "bending plane"). On the other hand, such a phenomenon does not occur often when the angle between the bending plane and the opening direction (referred to as "insertion angle") is 0° or 180°.

When creating a product having a complex shape such as the one shown in Fig. 7 by insetting a thermoplastic resin tube into the bending die 1 of the present invention, since there is a degree of freedom in design when it comes to the positions for providing the tube insetting portions 2 in the bending die 1, deviation from the "insertion angle" of 0° or 180° can be made small by optimally designing the relationship between the "bending plane" and the "opening direction" of each part in the tube insetting portions 2. As a result, such phenomenon as "the tube becoming flat or buckling" during the insetting process can be reduced as much as possible.

Furthermore, the bending die 1 according to the present invention has the effect of enabling the use of a self-propelled tube insetting device. To explain this effect, a correspondence relationship in shapes between the profile 5 and the bending die or unit bending die 1 is explained first. The recess portion 6 and the opening 7 of the first closed curve C1 of the profile 5 of Fig. 3 forming the bending die 1 correspond to the tube insetting portions 2 shown in Fig. 7. The upper rail portions 8, 8, which are gentle curves or straight lines adjacent to both sides of the opening 7 shown in Fig. 3, correspond to a pair of upper rails 17, 17 shown in Fig. 7. The connection 4 and the attachment 3 of the unit bending die 1 shown in each of Figs. 1 and 2 are formed at the position corresponding to the rear-side section 9 of the opening 7 shown in Fig. 3. The lower rail portions 10, 10, which are gentle curves or straight lines adjacent to both sides of the rear-side section 9 shown in Fig. 3, correspond to a pair of lower rails 18, 18 shown in Fig. 7.

The shape formed by moving the profile 5 of Fig. 3 within three-dimensional space has the pair of upper rails 17, 17 and the pair of lower rails 18, 18 around the bending die 1, the upper rails 17, 17 and the lower rails 18, 18 extending along the tube insetting portions 2, as shown in Fig. 7. This means that the tube is tentatively placed in the tube insetting portions 2, and thereafter a hand or a slider is caused to slide along the upper rails 17, 17 and the lower rails 18, 18, whereby the tube can be insetted into the tube insetting portions 2 easily and securely.

Instead of a hand or a slider, a slider can be moved along these upper rails 17, 17 and the lower rails 18, 18. For example, a slider sliding on the upper rails 17, 17 and a roller rolling on the lower rails 18, 18 can be provided, and a traveling body that insets the tube can be moved by rotating the roller while holding the bending die 1 between the slider and the roller; in this manner, the tube can be insetted without using a human hand.

Next is described the shape of the second closed curve C2 for forming the heat medium hole 13 for managing the temperature of the bending die 1. The second closed curve C2 composed of a closed curve is formed inside the first closed curve C1 of the profile 5, and the heat medium hole 13 is formed by the second closed curve C2 as described above. Since the heat medium is for controlling the temperatures of the bending die 1 and the tube insetted therein, it is preferred that the heat medium hole 13 with high heat-exchange efficiency be formed. In order to do so, ridges for increasing the surface area of the heat medium hole 13 are formed on an inner surface of the hole. In other words, it is preferred that the second closed curve C2 be provided with roughness to increase the length of the curve.

Fig. 8 is a front view showing several preferred examples of the shape of the profile, particularly the shape of the second closed curve C2. Fig. 8(a) shows that the profile 5 does not have the second closed curve C2 but only includes the first closed curve C1, so the bending die is a solid structure. (b) to (f) each show that the profile 5 has the second closed curve C2, so the bending die is a hollow structure, wherein a hollow portion thereof is used as the heat medium hole 13. (b) shows protrusions formed on an inner surface of the hollow portion, (c) shows that the profile 5 includes two second closed curves, dividing the hollow portion into two sections, (d) shows protrusions each having a round cross section, which are formed on the inner surface of the hollow portion, (e) shows protrusions each having a triangular cross section, which are formed on the inner surface of the hollow portion, and (f) shows the second closed curve C2 composed of a number of closed curves, wherein the hollow portion is configured by a number of thin tube bundles.

Fig. 9 is a diagram showing an example of measuring temperature changes at three points in a case where the thermoplastic resin tube is formed using a solid bending die A formed by the profile shown in Fig. 8(a), and in a case where the thermoplastic resin tube is formed using a bending die B having two heat medium holes formed by the profile shown in Fig. 8(c) (the horizontal axis represents time (sec), and the vertical axis represents temperature (°C)).

In this measurement, the temperatures are controlled by feeding the heat medium to the inside of the tube without heating or cooling the bending dies A and B. Fig. 10 shows temperature measurement points A1, A2, A3 of the bending die A (measurement points of the bending die A), and temperature measurement points B1, B2, B3 of the bending die B (measurement points of the bending die B). The reference numerals applied to the respective temperature change curves of Fig. 9 indicate the temperature changes of the respective measurement points of each bending die. The tube was insetted into each bending die at a time point S. The ambient temperature was 26 ± 2°C.

The followings can be understood from Fig. 9.
1) The temperatures A2 and B2 of the center of the lower surface of the tube drop immediately after insetting the tube and then rise gradually.
2) In both bending dies A, B, the difference in temperature between the upper surface and the lower surface of the tube (A3 - A2), (B3 - B2) was 40 °C or higher until heating of the tube is completed, affecting the stability of the shape of the tube.
3) After the tube is insetted into each bending die, the rate of temperature rise at B2 of the lower surface of the tube is four times the rate of temperature rise at A2.

In conclusion, it is understood that even when the temperature of the bending die is not controlled, the hollow bending die B has a faster temperature response than the solid bending die A.

This measurement example indicates that a fast temperature response can be obtained when forming the thermoplastic resin tube using the bending die according to the present invention especially when using the hollow bending die.

Fig. 11 is a diagram showing an example of measuring temperature changes at the three points of the tube shown in Fig. 10 in a case where the temperature of the bending die B is not controlled (non-control) and in a case where the temperature of the bending die B is controlled (controlled), the bending die B having two heat medium holes formed by the profile shown in Fig. 8(c). When the temperature is not controlled (non-control), the bending die B is not heated/cooled. On the other hand, when controlling the temperature (controlled), the bending die and the tube are heated simultaneously by feeding the heat medium thereto during the bending step, and once a set temperature is reached, heating of the bending die is stopped before heating of the tube is stopped, and after heating of the tube is completed, the bending die and the tube are cooled simultaneously. In this measurement, changes in temperature between these cases are compared.

The temperature measurement points B1, B2, B3 are the three points shown in Fig. 10. Reference numerals B1non, B2non, B3non applied to the temperature change curves shown in Fig. 11 indicate the temperature changes of the respective points when the temperature of the bending die is not controlled, and reference numerals B1con, B2con, B3con indicate the temperature changes of the respective points when the temperature of the bending die is controlled. The tube was insetted into the bending die at a time point S shown in Fig. 11. A transition temperature T shown by a thin broken line in Fig. 11 is a glass transition point of the thermoplastic resin, and the product can be removed once the temperature drops to the transition temperature T or lower. The ambient temperature was 26 ± 2°C.

The followings can be understood from Fig. 11.
1) When the tube comes into contact with the preheated bending die when insetting the tube into the bending die, the temperature change at B2con is smaller than that of B2non.
2) During the period between after insetting the tube and the completion of heating the tube, the temperature difference (B2con - B3con) is smaller than the temperature difference (B2non - B3non), making the shape of the tube stable.
3) When the tube is cooled, the temperatures B2con, B3con of the entire tube when the temperature of the bending die is controlled (controlled) reach the glass transition temperature of the material (T = 46 °C) at a speed 1.5 times faster than the temperatures B2non, B3non of the entire tube when the temperature of the bending die is not controlled (non-controlled). This measurement example indicates that it is possible to realize the effect of being able to prevent unwanted deformation of the tube and shorten the cooling period after forming the tube, because, when forming a thermoplastic resin tube by using the bending die of the present invention that is provided with the heat medium holes, and when the temperature of the forming die is controlled, the tube can be formed while maintaining the condition that the temperature of the tube is uniform.

Note that the temperature change at each of the points described above naturally changes depending on the types, temperatures, flow rate, and other conditions of the heat medium fed to the inside of the tube and the medium fed into the heat medium holes of the bending die, in order to control the temperature of the tube. However, it is conceivable that the effects described above can be achieved in any case.

The bending die according to the present invention for forming a tube by bending, insetting, and heating/cooling the tube and the method for manufacturing the bending die were described above in detail. However, needless to say, objects to which the present invention can be applied are not limited to those illustrated in the drawings; the present invention can be implemented as other forms of devices and methods with the same technical idea.

### [Industrial Applicability]

According to the bending die of the present invention, a product that is created by insetting a thermoplastic resin tube into the bending die can be produced even if the shape of the product exceeds two meters in length or even if the product has a complex shape that is bent freely in three-dimensional space. Thus, the present invention can be widely used for bending a variety of resin or metal pipes and hoses that are used particularly as automobile parts and the like.

### [Reference Signs List]

- 1: Bending die, unit bending die
- 2: Tube insetting portion
- 2a: Insetting recess portion
- 3: Attachment
- 4: Connection
- 5: Profile
- 5a to 5j: Profile surface
- 6: Recess portion
- 7: Opening
- 8: Upper rail portion
- 9: Rear-side section of opening
- 10: Lower rail portion
- 11: Plane including profile
- 12a: Screw
- 12b: Nut
- 13, 13a: Heat medium hole
- 13b: Opening
- 13d: O-ring
- 14: Supply/discharge hole
- 17: Upper rail
- 18: Lower rail
- C1: First closed curve
- C2: Second closed curve
- 20: Tube

## Claims

1. A bending die (1) for inset molding of a tube (20), the bending die (1) having a smooth shape formed by virtually and continuously moving, in three-dimensional space, a profile (5) including a substantially circular-shaped first closed curve (C1) having a recess portion (6), wherein an opening width (b) of the recess portion (6) is shorter than a groove width (a) of the recess portion (6), a tube insetting portion (2) is formed by the recess portion (6),
**characterized in that** the smooth shape is realized and created in real space using a three-dimensional printing technique, and the shape formed by moving the profile (5) within three-dimensional space has a pair of upper rails (17) and a pair of lower rails (18) around the bending die (1), and that the virtual, continuous movement in three-dimensional space is a combination of movements of a simple parallel translation of the profile (5), a turning or tilting movement (Rx, Ry) which is a combination of a change in a direction of a profile surface (5a - 5j) and parallel translation, a twisting movement (Rz) which is a combination of in-plane rotation and parallel translation of the profile surface (5a - 5j).

2. The bending die (1) according to claim 1, wherein two regions (8) adjacent to both sides of an opening (7) of the recess portion (6) of the profile (5) are gentle curves or straight lines, and two regions (10) adjacent to both sides of a rear-side section of the opening (7) of the recess portion (6) of the profile (5) are gentle curves or straight lines, wherein the upper rail portions (8), which are adjacent to both sides of the opening (7), correspond to a pair of upper rails (17) and the lower rail portions (10), which are adjacent to both sides of the rear-side section (9), correspond to a pair of lower rails (18) and a traveling body that insets the tube (20) holds the bending die (1) and a slider is caused to slide along the upper rails (17) and the lower rails (18).

3. The bending die (1) according to claim 1 or 2, which is formed by connecting a plurality of unit bending dies (1) in series, wherein each of the unit bending dies (1) has, at an end portion thereof, a connection for connecting each of the unit bending dies (1) to a unit bending die (1) adjacent thereto.

4. The bending die (1) according to any one of claims 1 to 3, which is created by a three-dimensional printing technique using metal, wherein the profile (5) including the first closed curve (C1) internally includes a second closed curve (C2) composed of a closed curve, and a heat medium hole (13, 13a) is formed by the second closed curve (C2).

5. A method for manufacturing a bending die (1), comprising the steps of: designing a smooth shape of a bending die (1) for inset-molding of a tube (20), the smooth shape being formed by virtually and continuously moving, in three-dimensional space and having a pair of upper rails (17) and a pair of lower rails (18) around the bending die (1), a profile (5) including a substantially circular-shaped first closed curve (C1) having a recess portion (6), wherein an opening width (b) of the recess portion (6) is shorter than a groove width (a) of the recess portion (6) and the virtually, continuously moving in three-dimensional space is a combination of movements of simple parallel translating of the profile (5), a turning or tilting (Rx, Ry) which is a combination of changing in a direction of a profile surface (5a - 5j) and parallel translating, a twisting (Rz) which is a combination of in-plane rotating and parallel translating of the profile surface (5a - 5j); obtaining data of the smooth shape; and creating a bending die (1) having the smooth shape based on the data by using a three-dimensional printing technique.

6. The method for manufacturing a bending die (1) according to claim 5, wherein the upper rail portions (8), which are gentle curves or straight lines adjacent to both sides of the opening (7), correspond to a pair of upper rails (17) and the lower rail portions (10), which are gentle curves or straight lines adjacent to both sides of the rear-side section (9), correspond to a pair of lower rails (18) and a traveling body that insets the tube (20) holds the bending die (1) and a slider is caused to slide along the upper rails (17) and the lower rails (18).

7. The method for manufacturing a bending die (1) according to claim 5 or 6, which is formed by connecting a plurality of unit bending dies (1) in series, wherein each of the unit bending dies (1) has, at an end portion thereof, a connection for connecting each of the unit bending dies (1) to a unit bending die (1) adjacent thereto.

8. The method for manufacturing a bending die (1) according to claim 5, 6 or 7, wherein the profile including the first closed curve (C1) internally includes a second closed curve (C2) composed of a closed curve, and a heat medium hole (13) is formed by the second closed curve (C2).

## Patentansprüche

1. Biegematrize (1) zum Einsetzformen eines Rohrs (20), wobei die Biegematrize (1) eine glatte Form aufweist, die durch virtuelles und kontinuierliches Bewegen eines Profils (5) im dreidimensionalen Raum gebildet wird, das eine im Wesentlichen kreisförmige erste geschlossene Kurve (C1) mit einem Ausnehmungsabschnitt (6) aufweist, wobei eine Öffnungsbreite (b) des Ausnehmungsabschnitts (6) kürzer ist als eine Nutbreite (a) des Ausnehmungsabschnitts (6), ein Rohreinsetzabschnitt (2) durch den Ausnehmungsabschnitt (6) gebildet wird, **dadurch gekennzeichnet, dass** die glatte Form im realen Raum unter Verwendung einer dreidimensionalen Drucktechnik realisiert und erzeugt wird, und die durch Bewegen des Profils (5) im dreidimensionalen Raum gebildete Form ein Paar oberer Schienen (17) und ein Paar unterer Schienen (18) um die Biegematrize (1) herum aufweist, und dass die virtuelle, kontinuierliche Bewegung im dreidimensionalen Raum eine Kombination von Bewegungen einer einfachen parallelen Translation des Profils (5) ist, einer Dreh- oder Kippbewegung (Rx, Ry), die eine Kombination aus einer Richtungsänderung einer Profilfläche (5a - 5j) und einer Parallelverschiebung ist, einer Verdrehbewegung (Rz), die eine Kombination aus einer Rotation in der Ebene und einer Parallelverschiebung der Profilfläche (5a - 5j) ist.

2. Biegematrize (1) nach Anspruch 1, wobei zwei Bereiche (8), die an beide Seiten einer Öffnung (7) der Ausnehmung (6) des Profils (5) angrenzen, sanfte Kurven oder Geraden sind, und zwei Bereiche (10), die an beide Seiten eines rückseitigen Abschnitts der Öffnung (7) der Ausnehmung (6) des Profils (5) angrenzen, sanfte Kurven oder Geraden sind, wobei die oberen Schienenabschnitte (8), die an beide Seiten der Öffnung (7) angrenzen, einem Paar oberer Schienen (17) entsprechen und die unteren Schienenabschnitte (10), die an beide Seiten des Rückseitenabschnitts (9) angrenzen, einem Paar unterer Schienen (18) entsprechen, und ein Bewegungskörper, der das Rohr (20) einsetzt, die Biegematrize (1) hält und ein Schieber entlang der oberen Schienen (17) und der unteren Schienen (18) gleiten gelassen wird.

3. Biegematrize (1) nach Anspruch 1 oder 2, der durch Hintereinanderschalten einer Vielzahl von Einheits-Biegematrizen (1) gebildet wird, wobei jede der Einheits-Biegematrizen (1) an einem Endabschnitt davon eine Verbindung zum Verbinden jeder der Einheits-Biegematrize (1) mit einer benachbarten Einheits-Biegematrize (1) aufweist.

4. Biegematrize (1) nach einem der Ansprüche 1 bis 3, die durch eine dreidimensionale Drucktechnik unter Verwendung von Metall hergestellt ist, wobei das Profil (5), das die erste geschlossene Kurve (C1) enthält, im Inneren eine zweite geschlossene Kurve (C2) enthält, die aus einer geschlossenen Kurve besteht, und ein Wärmeträgerloch (13, 13a) durch die zweite geschlossene Kurve (C2) gebildet wird.

5. Verfahren zur Herstellung einer Biegematrize (1), das die folgenden Schritte umfasst: Entwerfen einer glatten Form einer Biegematrize (1) zum Einsetzen eines Rohrs (20), wobei die glatte Form durch virtuelles und kontinuierliches Bewegen eines Profils (5), das eine im Wesentlichen kreisförmige erste geschlossene Kurve (C1) mit einem Ausnehmungsabschnitt (6) aufweist, im dreidimensionalen Raum gebildet wird und ein Paar oberer Schienen (17) und ein Paar unterer Schienen (18) um die Biegematrize (1) aufweist, wobei eine Öffnungsbreite (b) des Ausnehmungsabschnitts (6) kürzer ist als eine Nutbreite (a) des Ausnehmungsabschnitts (6) und die virtuelle Form, ein kontinuierliches Bewegen im dreidimensionalen Raum eine Kombination von Bewegungen eines einfachen parallelen Verschiebens des Profils (5), eines Drehens oder Kippens (Rx, Ry), das eine Kombination eines Änderns in einer Richtung einer Profiloberfläche (5a - 5j) und eines parallelen Verschiebens ist, eines Verdrehens (Rz), das eine Kombination eines Drehens in der Ebene und eines parallelen Verschiebens der Profiloberfläche (5a - 5j) ist; Erhalten von Daten der glatten Form; und Erzeugen einer Biegematrize (1) mit der glatten Form auf der Grundlage der Daten unter Verwendung einer dreidimensionalen Drucktechnik.

6. Verfahren zur Herstellung einer Biegematrize (1) nach Anspruch 5, wobei die oberen Schienenabschnitte (8), die sanfte Kurven oder gerade Linien sind, die an beide Seiten der Öffnung (7) angrenzen, einem Paar oberer Schienen (17) entsprechen und die unteren Schienenabschnitte (10), die sanfte Kurven oder gerade Linien sind, die an beide Seiten des hinteren Abschnitts (9) angrenzen, einem Paar unterer Schienen (18) entsprechen, und ein beweglicher Körper, der in das Rohr (20) eindringt, die Biegematrize (1) hält und ein Gleiter dazu gebracht wird, entlang der oberen Schienen (17) und der unteren Schienen (18) zu gleiten.

7. Verfahren zur Herstellung einer Biegematrize (1) nach Anspruch 5 oder 6, die durch Hintereinanderschalten einer Vielzahl von Einheits-Biegematrizen (1) gebildet wird, wobei jede der Einheits-Biegematrizen (1) an einem Endabschnitt davon eine Verbindung zum Verbinden jeder der Einheits-Biegematrizen (1) mit einer benachbarten Einheits-Biegematrize (1) aufweist.

8. Verfahren zur Herstellung einer Biegematrize (1) nach Anspruch 5, 6 oder 7, wobei das Profil, das die erste geschlossene Kurve (C1) enthält, im Inneren eine zweite geschlossene Kurve (C2) enthält, die aus einer geschlossenen Kurve besteht, und ein Wärmeträgeröffnung (13) durch die zweite geschlossene Kurve (C2) gebildet wird.

## Revendications

1. Matrice de flexion (1) pour le moulage par insertion d'un tube (20), la matrice de flexion (1) ayant une forme lisse formée par le déplacement virtuel et continu, dans un espace tridimensionnel, d'un profilé (5) comprenant une première courbe fermée (C1) de forme sensiblement circulaire ayant une partie de renfoncement (6), dans laquelle une largeur d'ouverture (b) de la partie évidée (6) est plus courte qu'une largeur de rainure (a) de la partie évidée (6), une partie d'insertion du tube (2) est formée par la partie évidée (6), **caractérisée en ce que** la forme lisse est réalisée et créée dans l'espace réel à l'aide d'une technique d'impression tridimensionnelle , et que la forme formée par le déplacement du profilé (5) dans l'espace tridimensionnel comporte une paire de rails supérieurs (17) et une paire de rails inférieurs (18) autour de la matrice de flexion (1), et que le mouvement virtuel continu dans l'espace tridimensionnel est une combinaison de mouvements d'une simple translation parallèle du profilé (5), un mouvement de rotation ou d'inclinaison (Rx, Ry) qui est une combinaison d'un changement de direction d'une surface de profil (5a - 5j) et d'une translation parallèle, un mouvement de torsion (Rz) qui est une combinaison d'une rotation dans le plan et d'une translation parallèle de la surface de profil (5a - 5j).

2. Matrice de flexion (1) selon la revendication 1, dans laquelle deux régions (8) adjacentes aux deux côtés d'une ouverture (7) de la partie évidée (6) du profilé (5) sont des courbes douces ou des lignes droites, et deux régions (10) adjacentes aux deux côtés d'une section arrière de l'ouverture (7) de la partie évidée (6) du profilé (5) sont des courbes douces ou des lignes droites, dans lesquelles les parties supérieures du rail (8), qui sont adjacentes aux deux côtés de l'ouverture (7), correspondent à une paire de rails supérieurs (17) et les parties de rails inférieurs (10), qui sont adjacentes aux deux côtés de la section arrière (9), correspondent à une paire de rails inférieurs (18) et un corps de déplacement qui insère le tube (20) maintient la matrice de cintrage (1) et un coulisseau est amené à glisser le long des rails supérieurs (17) et des rails inférieurs (18).

3. Matrice de flexion (1) selon la revendication 1 ou 2, formée par la connexion en série de plusieurs matrices de flexion unitaires (1), dans laquelle chacune des matrices de flexion unitaires (1) possède, à une de ses extrémités, un raccord permettant de connecter chacune des matrices de flexion unitaires (1) à une matrice de flexion unitaire (1) qui lui est adjacente.

4. La matrice de flexion (1) selon l'une des revendications 1 à 3, qui est créée par une technique d'impression tridimensionnelle utilisant du métal, dans laquelle le profil (5) comprenant la première courbe fermée (C1) comprend intérieurement une deuxième courbe fermée (C2) composée d'une courbe fermée, et un trou de fluide thermique (13, 13a) est formé par la deuxième courbe fermée (C2).

5. Procédé de fabrication d'une matrice de flexion (1), comprenant les étapes suivantes concevoir une forme lisse d'une matrice de flexion (1) pour le moulage par insertion d'un tube (20), la forme lisse étant formée par le déplacement virtuel et continu, dans un espace tridimensionnel et ayant une paire de rails supérieurs (17) et une paire de rails inférieurs (18) autour de la matrice de flexion (1), d'un profil (5) comprenant une première courbe fermée (C1) de forme sensiblement circulaire ayant une partie d'évidement (6), dans laquelle une largeur d'ouverture (b) de la partie d'évidement (6) est plus courte qu'une largeur de rainure (a) de la partie d'évidement (6) et le virtuellement, le mouvement continu dans l'espace tridimensionnel est une combinaison de mouvements de simple translation parallèle du profil (5), de rotation ou d'inclinaison (Rx, Ry) qui est une combinaison de changement de direction d'une surface de profil (5a - 5j) et de translation parallèle, de torsion (Rz) qui est une combinaison de rotation dans le plan et de translation parallèle de la surface de profil (5a - 5j) ; obtenir les données de la forme lisse ; et créer une matrice de flexion (1) ayant la forme lisse sur la base des données en utilisant une technique d'impression tridimensionnelle.

6. Procédé de fabrication d'une matrice de flexion (1) selon la revendication 5, dans lequel les parties du rail supérieur (8), qui sont des courbes douces ou des lignes droites adjacentes aux deux côtés de l'ouverture (7), correspondent à une paire de rails supérieurs (17) et les parties du rail inférieur (10), qui sont des courbes douces ou des lignes droites adjacentes aux deux côtés de la section arrière (9), correspondent à une paire de rails inférieurs (18), qui sont des courbes douces ou des lignes droites adjacentes aux deux côtés de la section arrière (9), correspondent à une paire de rails inférieurs (18) et un corps de déplacement qui insère le tube (20) tient la matrice de cintrage (1) et un coulisseau est amené à glisser le long des rails supérieurs (17) et des rails inférieurs (18).

7. Procédé de fabrication d'une matrice de flexion (1) selon la revendication 5 ou 6, qui est formé par la connexion d'une pluralité de matrices de flexion unitaires (1) en série, dans lequel chacune des matrices de flexion unitaires (1) a, à une de ses extrémités, une connexion pour connecter chacune des matrices de flexion unitaires (1) à une matrice de flexion unitaire (1) qui lui est adjacente.

8. Procédé de fabrication d'une matrice de flexion (1) selon la revendication 5, 6 ou 7, dans lequel le profil comprenant la première courbe fermée (C1) comprend intérieurement une deuxième courbe fermée (C2) composée d'une courbe fermée, et un trou de fluide thermique (13) est formé par la deuxième courbe fermée (C2).
